# EUROPÄISCHE PATENTSCHRIFT

(11) **EP 3 020 358 B1**
(45) Veröffentlichungstag und Bekanntmachung des Hinweises auf die Patenterteilung: **11.09.2019**
(21) Anmeldenummer: 14193336.6
(22) Anmeldetag: 14.11.2014
(51) Int. Cl.: A61C 8/00

(54) **Zahnersatz-Erzeugungsverfahren**
Dental Prosthetic Production Method
Méthode de production d'une prothèse dentaire

(43) Veröffentlichungstag der Anmeldung: 18.05.2016
(73) Patentinhaber: Ivoclar Vivadent AG, 9494 Schaan (LI)
(72) Erfinder: Burger, Goran, 9472 Grabs (CH); Peschke, Arndt, 9498 Planken (LI)
(74) Vertreter: Baronetzky, Klaus

(56) Entgegenhaltungen:
- EP-A2- 1 062 916
- JP-B1- 5 553 293

## Beschreibung

Die Erfindung betrifft ein Verfahren zur Erzeugung eines Zahnersatzes, der ein Implantat und ein Abutment aufweist.

Implantatgebundene Dentalrestaurationen werden in großem Umfang und seit mehreren Jahrzehnten eingesetzt. Grundlage ist stets ein Implantat, das mit dem Kieferknochen eines Patienten fest verbunden ist, in der Regel über eine Schraubverbindung.

Für die Bereitstellung der eigentlichen Dentalrestauration hat es sich als zweckmäßig herausgestellt, eine Mesostruktur, ein sogenanntes Abutment, zu verwenden, das typischerweise aus Metall wie Titan besteht, aber auch aus einer hochfesten Oxidkeramik bestehen kann, und als Verbindungselement zu der Suprastruktur dient, die meist aus einer Glaskeramik oder einer Feldspatkeramik besteht.

Die Anforderungen an eine derart hergestellte Dentalrestauration sind erheblich:
So ist die Dauerhaltbarkeit ein wichtiges Akzeptanzkriterium, auch unter starken Wechselbelastungen, und auch die Ästhetik ist in besonderem Maße gefordert.

Die Dentalrestauration soll einen transluzenten Charakter haben, ähnlich wie natürliche Zähne. Dies gilt selbstverständlich nicht nur für Einzelzähne, sondern auch für Brücken und dergleichen.

Bereits etwas betagtere Beispiele für derartige Lösungen sind aus der DE 32 41 963 C1 oder der GB 2 119 258 ersichtlich. Zu neueren Lösungen, die auch eine Rotationssicherung ermöglichen, sei auf die US 5 782 918 A1 verwiesen.

Aus Gründen der einfacheren Lagerhaltung, aber auch, um Haftungsfälle sicher auszuschließen, wird typischerweise eine einzige Größe des Abutments vorgehalten. Diese ist für Sechser- und Siebener-Molare ausreichend, nimmt also auch die dort anfallenden Scherkräfte auf. Dies bedingt eine gewisse und nicht unbeträchtliche Höhe des Rohrabschnitts des Abutments, über welchen das Abutment in die Suprastruktur hineinragt.

EP 1 062 916 A2 offenbart ein Verfahren zur Herstellung eines individuell gefertigten implantatgestützten Zahnersatzes.

Wenn nun das gleiche Abutment für eine Eckzahn- oder Schneidezahnrestauration eingesetzt werden soll, wäre mindestens das ästhetische Ergebniss unbefriedigend, da der metallische Rohrabschnitt dann durch die Glaskeramik der Suprakonstruktion ersichtlich wäre, was zu einem ästhetisch unbefriedigenden Gesamteindruck führt.

Man hat daher versucht, über einen sogenannten Opaker das Durchscheinen des metallischen Abutments zu verhindern. Problem bleibt dennoch die vergleichsweise geringe Wandstärke der Suprastruktur bei Standard-Abutments.

Dieses Problem ist Zahntechnikern und insbesondere auch Zahnärzten gut bekannt. Um etwaige Beanstandungen seitens der Patienten vorab zu vermeiden, kürzen Zahnärzte häufig kurzerhand - entgegen den Vorschriften der Hersteller der Abutments - den Rohrabschnitt beispielsweise mit einer einfachen Metallsäge, um so zu vermeiden, dass der Rohrabschnitt in dünne Bereiche der Suprakonstruktion hineinragt.

Hiermit lässt sich die Primärakzeptanz derartiger Dentalrestaurationen bei den Patienten steigern.

Überraschenderweise wird diese Lösung jedoch mit Haltbarkeitsbeanstandungen erkauft, die dazu führen, dass der Zahntechniker oder Zahnarzt die Dentalrestauration in vergleichsweise kurzer Zeit ersetzen muss oder für diese sogar in Regress genommen wird.

Daher liegt der Erfindung die Aufgabe zugrunde, ein Verfahren zur Erzeugung eines Zahnersatzes, der eine verbesserte Langfristakzeptanz bei implantatgebundenen Dentalrestaurationen ermöglicht.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass mit einem einfach gestalteten Hilfselement eine überraschend auch langzeitverträgliche Kürzung des Rohrabschnitts des Abutments bei Bedarf vorgenommen werden kann. Hierzu weist das Hilfselement einen Höhenanschlag auf, der zum einen eine präzise Ausrichtung ermöglicht, beispielsweise, indem der Höhenanschlag auf dem Kragen des Abutments aufsteht, und zum anderen ein vorgegebenes Höhenmaß für den Rohrabschnitt ermöglicht.

Beispielsweise ist hierdurch das Implantat in einem vorgegebenen Rastermaß, beispielsweise in den drei Höhen S, M und L, hinsichtlich der Höhe festlegbar.

Durch die Anbringung eines Radius oder mindestens einer Schrägfläche ist sichergestellt, dass die Dauerhaltbarkeit gewährleistet ist. Wie Versuche ergeben haben, ist die Dauerbelastbarkeit von mit dem erfindungsgemäßen Hilfselement gekürzten Rohrabschnitten überraschend wesentlich verbessert; im Vergleich mit per Handsäge gekürzten Rohrabschnitten. Besonders günstig hierbei ist es, dass durch die Anbringung des Radius oder der Abrundung des Rohrabschnitts außen die Einleitung von Kerbwirkungskräften in die Suprastruktur reduziert oder sogar vollständig vermieden werden kann.

Durch die automatische Parallelausrichtung der Stirnfläche des Rohrabschnitts mit dem Kragen werden auch Ausrichtfehler, die zu einer Schrägstellung der Suprastruktur führen können, sicher vermieden, und damit Problemstellen in der Okklusalposition des Zahnersatzes, die dann ein späteres Nacharbeiten erfordern - wenn sie überhaupt beseitigt werden.

Erfindungsgemäß lässt sich in einfacher Weise das Hilfselement dann einsetzen, wenn eine Dentalrestauration erstellt werden soll, die kleiner oder zumindest weniger hoch als die Maximalgröße ist. Erfindungsgemäß wird hierzu dann die Höhe des Rohrabschnitts festgelegt, beispielsweise auf die Höhe 4mm = S oder 5mm = M. Die Höhenfestlegung erfolgt so, dass die Wandstärke zur Okklusalfläche ein vorgegebenes Minimalmaß nicht unterschreitet. Dieses Minimalmaß kann auf 2mm oder beispielsweise auch auf 1,5mm festgelegt werden. Die Kürzung kann beispielsweise erfolgen, indem das als Fräser ausgebildete Hilfselement in ein ohnehin vorhandenes dentales Handstück eingespannt wird. Das ebenfalls fixierte Abutment wird dann auf exakt das vorgegebene Maß von beispielsweise 4mm Rohrabschnittshöhe zurechtgefräst wobei die Drehzahlen des dentalen Handstücks typischerweise 50 bis 60 Umdrehungen pro Minute betragen können.

In einer alternativen Ausgestaltung ist das Hilfselement für die Realisierung von Markierungen vorbereitet. Es wird hierzu über das Hilfselement die erwünschte Markierung in der Höhe beispielsweise 4mm angebracht, und über einen an sich bekannten Fräser wird dann die erwünschte Höhe eingestellt. Hiernach wird das dentale Handstück zur Aufbringung der erwünschten Ausrundungen bzw. Radien erneut eingesetzt, und durch manuelles Drehen des Hilfselements wird eine Nachbearbeitung erledigt, die die exakte gewünschte Form der Rohrabschnitt-Stirnfläche sicherstellt.

In beiden Fällen besteht der besondere Vorteil, dass eine exakt nacharbeitbare und vorbestimmte Oberflächengestaltung im Bereich der Stirnfläche des Rohrabschnitts realisierbar ist.

Auch wenn die Anbringung einer Ausrundung oder eines Radius am Außenumfang der Stirnfläche erfindungsgemäß besonders wichtig ist, versteht es sich, dass nichts dagegen spricht, auch eine entsprechende Ausrundung an dem radial inneren Ende der Stirnfläche des Rohrabschnitts vorzunehmen. Abgesehen von der exakten Formgebung und insofern Nacharbeitstreue lässt sich hiermit auch zugleich innenseitig und auch außenseitig der Stirnfläche ein Entgraten und Versäubern nach dem definierten Kürzen der Höhe des Rohrabschnitts sicherstellen.

Wenn an der Mesostruktur, also an dem Abutment, und an der Suprastruktur, also der kermischen Dentalrestauration, Rotationsschutzelemente vorgesehen sind, bleiben diese auch nach der Höhenkorrektur durch das erfindungsgemäße Hilfselement vollständig funktionsfähig.

Erfindungsgemäß ist es auch günstig, wenn das erfindungsgemäße Höhenmodifikationswerkzeug in die automatische CAD/CAM-Erstellung der Dentalrestauration eingebunden ist. Hierzu kann beispielsweise in der Designphase festgelegt werden, dass die Maximalhöhe der Suprastruktur, von Kragen des Abutments aus berechnet, als obere Randbedingung die doppelte Höhe des Rohrabschnitts haben soll, und als untere Randbedingung, dass die Wandstärke zur Okklusialfläche mindestens 1,5mm betragen soll.

Die CAD-Software entscheidet dann über den erforderlichen Einsatz des erfindungsgemäßen Höhenmodifikationswerkzeugs in dem vorgegebenen Rastermaß, und gibt dieses zugleich auch vor.

Es ist auch möglich, und erfindungsgemäß besonders günstig, wenn das Hilfselement einen integrierten Höhenanschlag aufweist, der bei der spanabhebenden Bearbeitung exakt dann wirksam wird, wenn die Zielhöhe erreicht ist. Hierzu ist der Höhenanschlag bevorzugt rotationssymmetrisch ausgestaltet. Beispielsweise kann er als Stift ausgebildet sein, der auf der Implantatschraube, die sich mit ihrem Schraubenkopf am Fuß des Rohrabschnitts erstreckt, aufliegt, oder als Hülse, die sich auf den Kragen des Abutments abstützt.

Es ist auch eine Kombination dieser Höhenanschläge möglich.

Nachdem die Schraubenköpfe der Implantatschrauben typischerweise nicht standarisiert sind und dementsprechend eine unterschiedliche Stärke aufweisen, ist die Auswahl des Kragens des Abutments als Referenz bevorzugt.

Erfindungsgemäß besonders günstig ist es, wenn das Hilfselement Führungselemente aufweist, die für die rotationssymmetrische Anlage an dem Rohrabschnitt des Abutments bestimmt sind. Hierdurch ist eine präzise und achsparallele Führung zwischen Hilfselement und Abutment gewährleistet. Die Führungselemente können sich entweder an der Innenfläche des Rohrabschnitts oder an der Außenfläche des Rohrabschnitts erstrecken, oder bei Bedarf auch an beiden.

In weiterer vorteilhafter Ausgestaltung ist es vorgesehen, dass das Hilfselement mindestens eine Spanabfuhrausnehmung aufweist. Die Spanabfuhrausnehmung erstreckt sich bevorzugt dem Stirnbereich eines Glockenkörpers des Hilselements benachbart und dient dazu, Späne, die bei der spanabhebenden Bearbeitung der Stirnfläche des Rohrabschnitts entstehen, nach außen abzuführen. Dementsprechend sind diese Ausnehmungen nach außen offen und bevorzugt leicht abgeschrägt, um die Spanabfurhr zu erleichtern.

In vorteilhafter Ausgestaltung ist es vorgesehen, dass die Höhenfestlegung des Rohrabschnitts des Abutments in Abstimmung mit vorhandenen ausbrennbaren presskeramischen Hilfsteilen erfolgt. Diese dienen dazu, die Stärke eines Klebespalts nach materialspezifischen Gesichtspunkten präzise und gleichmäßig festzulegen, wobei mit der vorgegebenen und normierten Länge des Rohrabschnitts zugleich vorgegebene und normierte Klebeflächen vorliegen, so dass die Sicherheit, dass keine Fehlklebung erfolgt, vergrößert ist.

Bevorzugt weist der Rohrabschnitt außen einen ganz leicht konusartigen Verlauf auf, mit einem Konuswinkel zwischen 0,5° und 8°. Entsprechendes gilt auch für die hierzu passende Innenfläche einer Hülse des Hilfselements, so dass diese ebenfalls in einem Innenkonuswinkel zwischen 0,5° und 8° verläuft.

Weitere vorteilhafte Einzelheiten und Merkmale ergeben sich aus der nachfolgenden Beschreibung mehrere Ausführungsbeispiele der Erfindung anhand der Zeichnung.

Es zeigen:
- Fig. 1: eine schematische Ansicht durch ein Abutment einer erfindungsgemäßen Zahnersatz-Erzeugungsvorrichtung;
- Fig. 2: eine schematische Schnittansicht durch das Abutment gemäß Fig. 1;
- Fig. 3: eine schematische Schnittansicht durch ein Hilfselement einer erfindungsgemäßen Zahnersatz-Erzeugungsvorrichtung, unter Darstellung zusätzlich des Abutments und der Implantatschraube;
- Fig. 4: eine weitere Ausführungsform des Hilfselements, in einer Darstellung gemäß Fig. 3;
- Fig. 5: eine weitere Darstellung einer weiteren Ausführungsform eines erfindungsgemäßen Hilfselements in der Darstellung ebenfalls gemäß Fig. 4;
- Fig. 6: eine weitere Darstellung einer weiteren Ausführungsform eines erfinungsgemäßen Hilfselements in der Darstellung ebenfalls gemäß Fig. 5;
- Fig. 7: eine weitere Darstellung einer weiteren Ausführungsform eines erfindungsgemäßen Hilfselements in der Darstellung ebenfalls gemäß Fig. 6; und
- Fig. 8: eine vergrößerte schematische Darstellung eines Details aus Fig. 7.

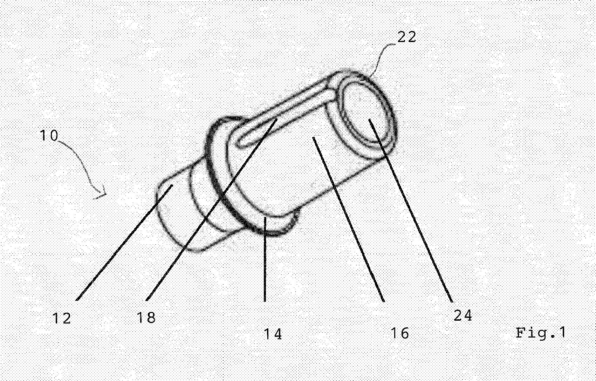

Das in Fig. 1 dargestellte Abutment 10 weist einen Implantatanschlussbereich 12 auf, der sich in zervikaler Richtung erstreckt und bei einem Kragen 14 endet. Der Kragen geht über Innenradien in einen Rohrabschnitt 16 über, der für die Aufnahme und Lagerung der Suprastruktur gedacht ist.

Der Rohrabschnitt 16 weist eine Nut 18 als sich nach radial innen erstreckende Rotationssicherung auf. Bei Einsatz des Abutments für eine Einzelrestauration wie eine Krone verhindert die Nut 18 ein versehentliches Verdrehen und dient insofern als Rotationsschutz. Ein entsprechender, in die Nut 18 passender Steg ist dementsprechend dann in der Suprastruktur ausgebildet.

Wenn das Abutment für einen Pfeilerzahn einer Brücke verwendet wird, verbleibt die Nut 18 in der hier dargestellten Form. Jedoch besteht kein Steg, der in die Nut 18 eingreifen würde, innen an der Suprastruktur. Hierdurch lässt sich die Verdrehsicherung der Brücke durch die zutreffende Ausrichtung zu dem anderen Pfeilerzahn hin gewährleisten, ohne dass es zu Verdrehspannungen kommen könnte.

Der Rohrabschnitt 16 endet im Bereich seiner Stirnfläche 20. Die Eintrittsöffnung des Rohrabschnitts 16 bildet zugleich einen Kanal 24 für die in Fig. 1 nicht dargestellte Implantatschraube.

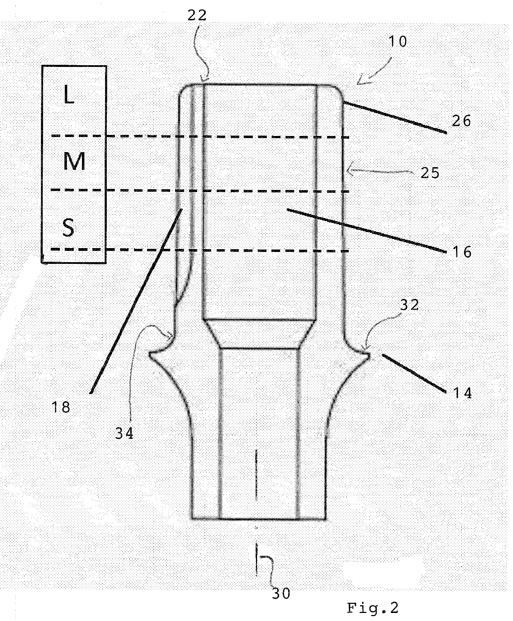

Aus Fig. 2 ist eine prinzipielle Schnittdarstellung des Abutments 10 ersichtlich. Es sind Normhöhen "L", "M" und "S" eingetragen, auf die der Rohrabschnitt 16 des Abutments kürzbar ist. Wie ersichtlich ist, erstreckt sich die Nut 18 auch unterhalb der Normhöhe "S", so dass die Verdrehsicherung auch bei Kürzung des Abutments 10 auf die Höhe S gewährleistet ist.

Wie aus Fig. 2 ersichtlich ist, ist der Übergang zwischen der Stirnfläche 22 und der Außenfläche 25 des Rohrabschnitts 16 mit einem Radius 26 ausgerundet. Die Größe dieses Radiuses 26 lässt sich in weiten Bereichen an die Erfordernisse anpassen; er beträgt in der Regel zwischen 0,05mm und 1,0mm und bevorzugt etwa 0,2mm. Durch diesen Außenradius 26 ist überraschend die Dauerhaltbarkeit der Suprastruktur deutlich verbessert; offenbar vergleichmäßigt der Außenradius 26 stark die maximale lokale Krafteinleitung in die Suprastruktur.

Wie ersichtlich ist, weist der Kragen 14 ein kreisförmig umlaufenden und sich senkrecht zu einer Achse 30 des Abutments erstreckenden Aufstandbereich 32 auf. Über einen hohlkehligen Radius 34 geht die Aufstandfläche 32 in die Außenfläche 25 des Rohrabschnitts 16 über.

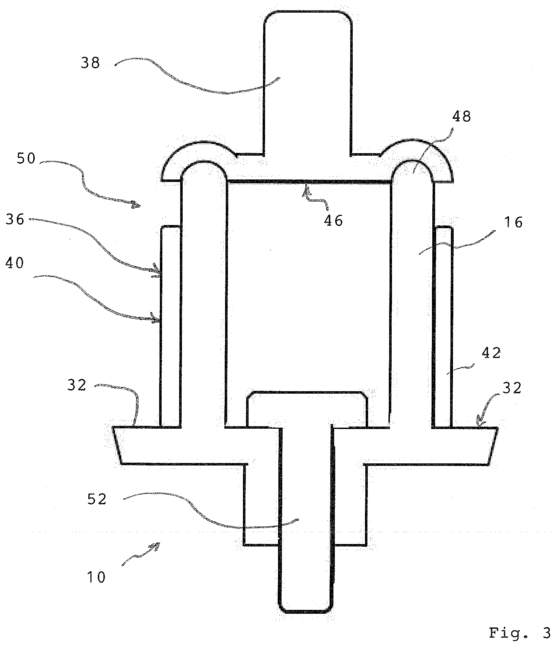

Erfindungsgemäß ist - wie es aus Figur 3 ersichtlich ist - es vorgesehen, die Kürzung des Rohrabschnitts 16 des Abutments 10 über ein Hilfselement 36 vorzusehen, das in Fig. 3 dargestellt ist. Das Hilfselement 36 ist von der prinzipiellen Querschnittform her wie eine Art Kronenbohrer ausgebildet. Es weist einen Schaft 38 auf, dessen Außendurchmesser für den Antrieb über einbeliebiges in der Zahnarztpraxis vorhandenes maschinelles Werkzeug geeignet ist. Hierzu beträgt der Schaftdurchmesser beispielsweise 2,35mm oder 3mm.

Der Glockenkörper 40 des Hilfselements 36 weist einen zylindrischen Abschnitt oder eine Hülse 42 auf, der bzw. die mit seinem bzw. ihrem Innendurchmesser in minimaler Spielpassung zu der Außenfläche 25 des Rohrabschnitts 16 des Abutments 10 passt. Der zylindrische Abschnitt 42 erstreckt sich unten bis zu der Aufstandsfläche 32 des Kragens 14, die als Bemaßungsreferenz dient.

Das hier dargestellte Hilfselement 36 ist für die Kürzung des Abutments 10 auf die Höhe "L" bestimmt. Hierzu weist es an den Außenbereichen seiner Stirnfläche 46 eine bezahnte Hohlkehle 48 auf. Dort wird bei Drehung des Hilfselements 36 über den Schaft 38 spanabhebend das Abutment 10 gekürzt, und zwar so lange, bis des zylindrische Abschnitt 42 auf der Aufstandsfläche 32 aufsetzt. Für das Fräsen kann die Stirnfläche 46 kreuzverzahnte Zähne aufweisen, für ein Schleifen kann diese mit Diamanten bestückt sein.

Wie aus Fig. 3 ersichtlich ist, sind Spanabfuhrausnehmungen 50 gleichmäßig um den Umfang des Hilfselements 36 verteilt, und zwar knapp unterhalb der Stirnfläche 46 an dem zylindrischen Abschnitt 42.

Wie aus Fig. 3 ebenfalls ersichtlich ist, erstreckt sich eine Implantatschraube 52 durch das Abutment 10 nach unten hindurch; diese dient in an sich bekannter Weise der Verankerung an dem zugehörigen Implantat.

Es versteht sich, dass für die drei Höhen "L", "M" und "S" des Rohrabschnitts 16 drei entsprechend bemessene Hilfselemente 36 vorgesehen sind. Durch die Ausgestaltung an der Hohlkehle 48 mit einem Innenradius ist sichergestellt, dass auch bei Kürzung des Rohrabschnitts 16 der Außenradius 26 (vgl. Fig. 2) erhalten bleibt.

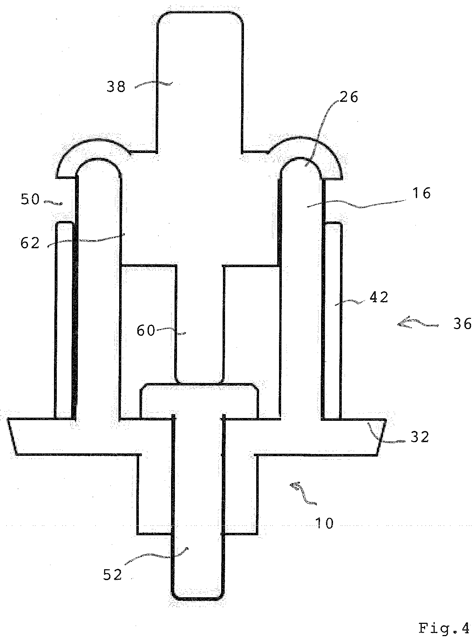

Eine weitere Ausgestaltung des Hilfselements 36 ist aus Fig. 4 ersichtlich. Dort wie auch in den weiteren Figuren weisen gleiche Bezugszeichen auf gleiche Teile hin. Das Hilfselement 36 gemäß Fig. 4 weist einen Anschlagstift 60 auf, der für die Auflage auf der Implantatschraube 52 bestimmt ist. Der Anschlagstift 60 erstreckt sich von einem Innenzylinder 62 des Hilfselements 36 ausgehend zur Implantatschraube 52 hin, so dass der Höhenanschlag des Hilfselement 36 durch die Implantatschraube 52 zusätzlich begrenzt ist.

In einer weiteren, hier nicht dargestellten, vorteilhaften Ausgestaltung ist es vorgesehen, dass der Glockenkörper 40 des Hilfselement 36 an dem zylindrischen Abschnitt 42 Markierungen aufweist. Während die Maximallänge des Glockenkörpers 40 dann der Höhe "L" entspricht, ist eine Markierung vorgesehen, die der Höhe "M" entspricht, und eine weitere Markierung, die der Höhe "S" entspricht. Bei Bedarf kann nun der Zahnarzt oder Zahntechniker den zylindrischen Abschnitt auf "M" bzw. sogar auf "S" kürzen und kann dann ohne zusätzliche Lagerhaltung die erwünschte Kürzung des Rohrabschnitts 16 des Abutments 10 entweder auf "L", auf "M" oder auf "S" vornehmen.

Dass die manuelle Kürzung des Glockenkörpers 40 vielleicht nicht in optimaler Quallität erfolgt, ist erfindungsgemäß völlig unkritisch, denn die formbestimmende Hohlkehle 48 bleibt von der Kürzung stets unberührt, so dass das Abutment 10 in perfekter Qualität auch erfindungsgemäß erzeugbar ist.

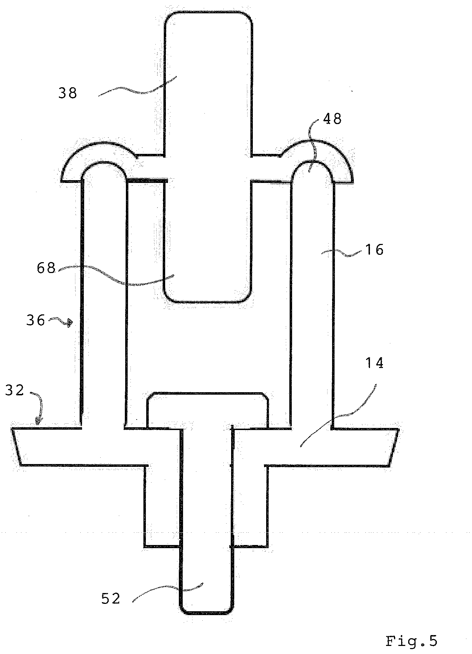

Aus Fig. 5 ist eine modifizierte Ausgestaltung des Hilfselements 36 ersichtlich. Dieses weist anstelle des Glockenkörpers 40 einen Innenkörper 66 auf, der für das Eindringen in den Rohrabschnitt 16 bestimmt ist. Der Innenkörper 66 ist mit einem Anschlussstift 68 mit dem Schaft 38 verbunden, und das Hilfselement 36 weist in gleicher Weise die Hohlkehle 48 für die Bereitstellung der Außenradius-Form des Rohrabschnitts 16 auf.

Durch die Form des Innenkörpers 66 wird in gleicher Weise ein Höhenanschlag gewährleistet, allerdings nicht auf der Aufstandsfläche 32, sondern auf der Implantatschraube 52.

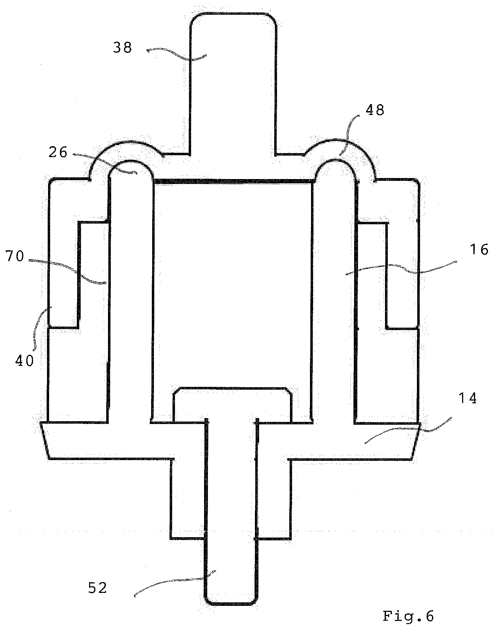

Aus Fig. 6 ist eine weitere Ausführungsform eines erfindungsgemäßen Hilfselements 36 ersichtlich. Anstelle des Innenkörpers ist dort ein Außenkörper 70 vorgesehen, der sich an den gekürzten Glockenkörper 40 nach unten anschließend erstreckt und auf der Aufstandsfläche 32 des Kragens 14 aufsteht. Auch hier ist in gleicher Weise eine Hohlkehle 48 zur Bereitstellung des Außenradius 26 des Rohrabschnitts 16 vorgesehen.

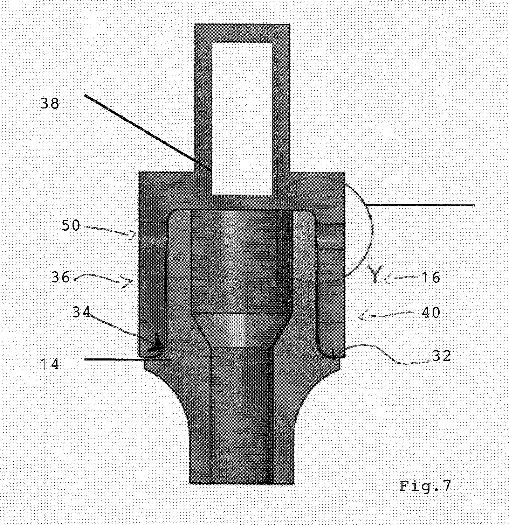

Aus Fig. 7 ist eine weitere Ausführungsform eines erfindungsgemäßen Hilfselements 36 ersichtlich. Der Glockenkörper 40 endet wiederrum außen/unten auf der Aufstandsfläche 32 des Kragens 14. Er weist einen balligen Aufbau entsprechend dem Radius 34 des Übergangs zwischen dem Rohrabschnitt 16 und dem Kragen 14 auf.

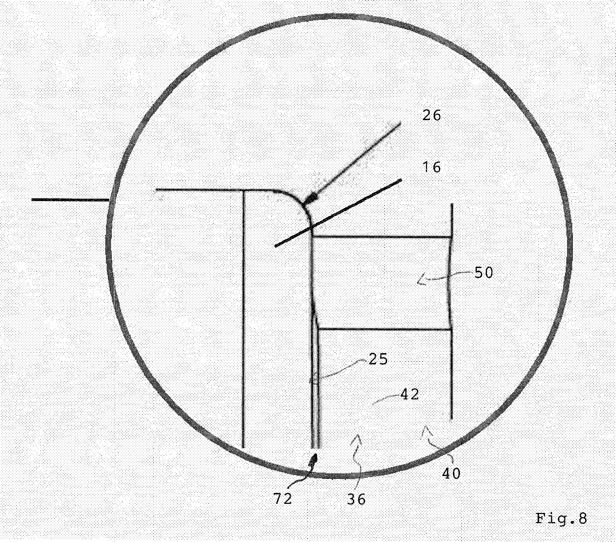

Aus Fig. 8 ist eine Detailansicht des Teils Y aus Fig. 7 ersichtlich. Es ist deutlich der Außenradius 26 ersichtlich, der durch die Hohlkehle 48 des Hilfselements 36 an den Rohrabschnitt 16 erzeugt wird.

Der zylindrische Abschnitt 42 des Glockenkörpers 40 des Hilfselements 36 weist ein kleines Spiel 72 gegenüber der Außenfläche 25 des Rohrabschnitts 16 auf, so dass keine oder höchstens eine minimale Reibung bei der spanabhebenden Bearbeitung entsteht.

## Patentansprüche

1. Verfahren zur Erzeugung eines Zahnersatzes, der ein Implantat und ein Abutment (10) aufweist, auf oder an welchem eine unter Zuhilfenahme von aufbauenden Verfahren wie Rapid Prototyping oder abtragenden Verfahren wie Fräsen, insbesondere mittels CAM erzeugte Dentalstruktur aus Dentalwerkstoff, insbesondere Keramik, befestigbar ist, wobei das Abutment (10) insbesondere über eine lösbare Verbindung, insbesondere eine Schraubverbindung, an dem Implantat gelagert ist, wobei das Abutment (10) einen Implantatanschluss, einen Kragen (14) und einen Rohrabschnitt (16) aufweist, der für die Verbindung mit der Dentalstruktur bestimmt ist, **dadurch gekennzeichnet,**
**dass** das Abutment (10) einen Rohrabschnitt (16) und ein Implantatanschlussteil aufweist, zwischen denen sich ein nach auswärts vorspringender Kragen (14) erstreckt, und
**dass** ein Hilfselement (36) mit einem zum Außendurchmesser des Rohrabschnitts (16) passenden Innendurchmesser vorgesehen ist,
welches Hilfselement (36) mindestens einen Höhenanschlag aufweist, der für die Anlage auf einer Stirnfläche (22) des Rohrabschnitts (16) an einer Implantatschraube (52) und/oder auf dem Kragen (14) bestimmt ist, und
**dass** das Verfahren die folgenden Schritte umfasst:
Bestimmen der Höhe des Rohrabschnitts (16) mit dem Hilfselement (36) und/oder
Festlegen der Höhe des Rohrabschnitts (16) durch Auswahl eines geeigneten Abutments (10) oder durch ein Kürzen des Rohrabschnitts (16).

2. Verfahren zur Erzeugung eines Zahnersatzes nach Anspruch 1, **dadurch gekennzeichnet, dass** mit dem Hilfselement (36) der Rohrabschnitt (16) auf die patientenspezifische Höhe in spanabhebender Bearbeitung gekürzt wird, insbesondere über eine Dentalfräsvorrichtung und/oder eine CAM-Vorrichtung.

3. Verfahren zur Erzeugung eines Zahnersatzes nach Anspruch 1 oder 2, **dadurch gekennzeichnet, dass** ein zentraler Stift des Hilfselements (36) vorgesehen ist, der für die Anlage an dem Kopf einer das Abutment (10) mindestens teilweise durchtretenden Schraube bestimmt ist.

4. Verfahren zur Erzeugung eines Zahnersatzes nach einem der vorhergehenden Ansprüche , **dadurch gekennzeichnet, dass** das Hilfselement (36) einen zentralen Stift aufweist, der an einem Stirnbereich eines Glockenkörpers (40) des Hilfselements (36) insbesondere einstückig angeformt ist, welcher Stift sich durch den Glockenkörper (40) hindurcherstreckt, diesen insbesondere überragt.

5. Verfahren zur Erzeugung eines Zahnersatzes nach einem der vorhergehenden Ansprüche , **dadurch gekennzeichnet, dass** das Hilfselement (36) einen insbesondere rastbaren Höhenanschlag aufweist, der für die Anlage an dem Abutment (10) bestimmt ist, welcher Höhenanschlag in einer vorgegebenen Relativposition zu einer Stirnfläche (22) des Rohrabschnitts (16) ist.

6. Verfahren zur Erzeugung eines Zahnersatzes nach einem der vorhergehenden Ansprüche , **dadurch gekennzeichnet, dass** das Hilfselement (36) zum Kürzen des Rohrabschnitts (16) ein spanabhebendes Werkzeug, insbesondere einen Handfräser aufweist, der von dem Glockenkörper (40) geführt ist.

7. Verfahren zur Erzeugung eines Zahnersatzes nach Anspruch 6, **dadurch gekennzeichnet, dass** eine Stirnfläche (46) des Glockenkörpers (40) des Hilfselements (36) insbesondere kreuzverzahnte Zähne aufweist, die für das Kürzen des Rohrabschnitts (16) des Abutments (10) bestimmt sind.

8. Verfahren zur Erzeugung eines Zahnersatzes nach einem der vorhergehenden Ansprüche, **dadurch gekennzeichnet, dass** das Hilfselement (36) einen Markierer aufweist, der mindestens eine Markierung an dem Abutment (10) anzubringen in der Lage ist, wobei die Markierung eine Kürzung des Rohrabschnitts (16) des Hilfselements (36) indiziert.

9. Verfahren zur Erzeugung eines Zahnersatzes nach Anspruch 8, **dadurch gekennzeichnet, dass** die Indikation der Kürzung in einem vorgegebenen Rastermaß erfolgt, insbesondere in 3 Höhen, in Abhängigkeit von der Größe, insbesondere der vertikalen Erstreckung der Suprastruktur, die die Dentalrestauration mit ausbildet.

10. Verfahren zur Erzeugung eines Zahnersatzes nach einem der vorhergehenden Ansprüche, **dadurch gekennzeichnet, dass** im Stirnbereich eines Glockenkörpers (40) des Hilfselements (36) ein ringförmiges konkaves Profil (Hohlkehle 48) vorgesehen ist, für die spanabhebende Bearbeitung der Sitrnfläche (22) des Rohrabschnitts (16) des Abutments (10) mit einer hierzu passenden konvexen Form.

11. Verfahren zur Erzeugung eines Zahnersatzes nach einem der vorhergehenden Ansprüche, **dadurch gekennzeichnet, dass** das Hilfselement (36) ein Höhenanschlagselement aufweist, das einen kleineren oder höchstens gleichgroßen Durchmesser wie der Rohrabschnitt (16) des Abutments (10) aufweist und das gegenüber der Bodenfläche des Rohrabschnitts (16) des Abutments (10) und/oder einer zugehörigen Abutmentschraube einen Anschlag bildet.

12. Verfahren zur Erzeugung eines Zahnersatzes nach einem der vorhergehenden Ansprüche, **dadurch gekennzeichnet, dass** das Hilfselement (36) ein Höhenanschlagselement aufweist, dass sich mit einem Innendurchmesser außerhalb des Rohrabschnitts (16) des Abutments (10) erstreckt, der größer als oder gleich wie der Außendurchmesser des Rohrabschnitts (16) ist und das für die Anlage an dem Kragen (14) des Abutments (10) zur Bereitstellung eines Höhenanschlags bestimmt ist.

13. Verfahren zur Erzeugung eines Zahnersatzes nach einem der Ansprüche 11 oder 12, **dadurch gekennzeichnet, dass** das Höhenanschlagselement sich in Spielpassung (72) zum Rohrabschnitt (16) des Abutments (10) erstreckt und insbesondere insofern ein Verdrehen des Hilfselements (36) mit dem Höhenanschlagelement gegenüber dem Abutment (10) ermöglicht.

14. Verfahren zur Erzeugung eines Zahnersatzes nach einem der vorhergehenden Ansprüche, **dadurch gekennzeichnet, dass** das Hilfselement (36) einen Glockenkörper (40) bildet, dessen Stirnseite eine Hohlkehle (48) aufweist, die für die Formung der Stirnfläche des Rohrabschnitts (16) bestimmt ist.

15. Verfahren zur Erzeugung eines Zahnersatzes nach einem der vorhergehenden Ansprüche, **dadurch gekennzeichnet, dass** das Hilfselement (36) einen Glockenkörper (40) aufweist, dessen offenes freies Ende einen umlaufenden Rand aufweist, der als Höhenanschlagelement dient, insbesondere gegenüber einer Aufstandsfläche (32) des Kragens (14) des Abutments (10).

16. Verfahren zur Erzeugung eines Zahnersatzes nach einem der vorhergehenden Ansprüche, **dadurch gekennzeichnet, dass** das Hilfselement (36) mindestens eine Spanabfuhr-Ausnehmung (50) aufweist, die einem Stirnbereich eines Glockenkörpers (40) des Hilfselements (36) benachbart ist.

## Claims

1. A method for producing a dental prosthesis which comprises an implant and an abutment (10), on or at which a dental structure made of dental material, in particular ceramics, is attachable, the dental material being produced using build-up methods such as rapid prototyping, or ablative methods such as milling, in particular by means of CAM, wherein the abutment (10) is supported onto the implant especially through a detachable connection, in particular a screw connection, wherein the abutment (10) has an implant connection, a collar (14) and a tube portion (16) which is for connecting to the dental structure, **characterized in that** the abutment (10) has a tube portion (16) and an implant connection part, in between of which an outwardly projecting collar (14) extends, and **in that** an auxiliary member (36) having an inside diameter which matches the outside diameter of the tube portion (16) is provided, which auxiliary member (36) has at least one height stop which is for abutting against an end face (22) of the tube portion (16) at an implant screw (52) and/or on the collar (14), and **in that** the method comprises the following steps: determining the height of the pipe portion (16) with the auxiliary member (36) and/or determining the height of the pipe portion (16) by selecting a suitable abutment (10) or by cutting back the pipe portion (16).

2. The method for producing a dental prosthesis according to Claim 1, **characterized in that** the tube portion (16) is cut back to suit the patient-specific height by machining with the auxiliary member (36), in particular by means of a dental milling device and/or a CAM device.

3. The method for producing a dental prosthesis according to claim 1 or 2, **characterized in that** a central pin of the auxiliary member (36) is provided, which is designed to bear against the head of a screw passing at least partially through the abutment (10).

4. The method for producing a dental prosthesis according to one of the preceding claims, **characterized in that** the auxiliary member (36) has a central pin which is in particular integrally formed on an end region of a bell body (40) of the auxiliary member (36), which pin extends through the bell body (40), and in particular projects beyond it.

5. The method for producing a dental prosthesis according to one of the preceding claims, **characterized in that** the auxiliary member (36) has a height stop, in particular a latchable height stop, which is for bearing against the abutment (10), which height stop is in a predetermined relative position to an end face (22) of the tube portion (16).

6. The method for producing a dental prosthesis according to one of the preceding claims, **characterized in that** the auxiliary member (36) for cutting the tube portion (16) has a cutting tool, in particular a hand cutter, which is guided by the bell body (40).

7. The method for producing a dental prosthesis according to claim 6, **characterized in that** an end face (46) of the bell body (40) of the auxiliary member (36) especially has cross-toothed teeth which are designed for cutting the tubular portion (16) of the abutment (10).

8. The method for producing a dental prosthesis according to one of the preceding claims, **characterized in that** the auxiliary member (36) comprises a marker capable of attaching at least one marker to the abutment (10), the marker indicating cut-back of the tubular portion (16) of the auxiliary member (36).

9. The method for producing a dental prosthesis according to claim 8, **characterized in that** indication of cut-back is done in a predetermined grid dimension, in particular at 3 heights, as a function of the size, in particular the vertical extent of the superstructure which forms the dental restoration.

10. The method for producing a dental prosthesis according to one of the preceding claims, **characterized in that** an annular concave profile (groove 48) is provided in the front region of a bell body (40) of the auxiliary member (36) for machining the end face (22) of the tube portion (16) of the abutment (10) with a matching convex shape.

11. The method for producing a dental prosthesis according to one of the preceding claims, **characterized in that** the auxiliary member (36) has a height stop element which has a smaller diameter or a diameter of at most the same size as the tube portion (16) of the abutment (10) and which forms a stop against the bottom surface of the tube portion (16) of the abutment (10) and/or an associated abutment screw.

12. The method for producing a dental prosthesis according to one of the preceding claims, **characterised in that** the auxiliary member (36) comprises a height stop element that extends outside the tube portion (16) of the abutment (10) with an inside diameter, which is greater than or equal to the outside diameter of the tube portion (16) and which height stop element is designed to abut the collar (14) of the abutment (10) to provide a height stop.

13. The method for producing a dental prosthesis according to one of claims 11 or 12, **characterized in that** the height stop element extends in a clearance fit (72) in relation to the pipe portion (16) of the abutment (10), and, especially in this respect, allows rotation of the auxiliary member (36) with the height stop element relative to the abutment (10).

14. The method for producing a dental prosthesis according to one of the preceding claims, **characterized in that** the auxiliary member (36) forms a bell body (40) the end face of which has a groove (48) which is designed to form the end face of the tubular portion (16).

15. The method for producing a dental prosthesis according to one of the preceding claims, **characterized in that** the auxiliary member (36) has a bell body (40), the open free end of which has a circumferential edge which serves as a height stop element, in particular opposite to a protruding surface (32) of the collar (14) of the abutment (10).

16. The method for producing a dental prosthesis according to one of the preceding claims, **characterized in that** the auxiliary member (36) has at least one chip removal recess (50) which is adjacent to an end region of a bell body (40) of the auxiliary member (36).

## Revendications

1. Procédure de production d'une prothèse dentaire, qui présente un implant et un pilier (10), sur ou à proximité duquel peut être attachée une structure dentaire en matériau dentaire, en particulier en céramique, fabriquée en CAO à l'aide procédés additifs tels que le prototypage rapide ou de procédés d'enlèvement tels que le fraisage, où le pilier (10) est logé sur l'implant en particulier par une connexion détachable, en particulier un raccord vissé, où le pilier (10) présente un connecteur d'implant, un collier (14) et une section tubulaire (16) destinée à la connexion à la structure dentaire, **caractérisée en ce que**
le pilier (10) présente une section tubulaire (16) et une section de connecteur d'implant, entre lesquelles s'étend un collier (14) saillant vers l'extérieur, et
un élément auxiliaire (36) avec un diamètre intérieur adapté au diamètre extérieur de la section tubulaire (16) est fourni, où ledit élément auxiliaire (36) présente au moins une butée de hauteur, qui est prévue pour l'appui contre une surface frontale (22) de la section tubulaire (16) sur une vis d'implant (52) et/ou sur le col (14), et que la procédure comprend les étapes suivantes:
détermination de la hauteur de la section tubulaire (16) avec l'élément auxiliaire (36) et/ou définition de la hauteur de la section tubulaire (16) en sélectionnant un pilier (10) adapté ou en raccourcissant la section tubulaire (16).

2. Procédure de production d'une prothèse dentaire selon la revendication 1, **caractérisée en ce que** la section tubulaire (16) peut être réduit à la hauteur spécifique au patient à l'aide l'élément auxiliaire (36), en traitement par enlèvement de copeaux, en particulier par un dispositif de fraisage dentaire et/ou un appareil CAO.

3. Procédure de production d'une prothèse dentaire selon la revendication 1 ou 2, **caractérisée en ce qu'**une tige centrale de l'élément auxiliaire (36) est prévue pour l'appui contre la tête d'une vis qui pénètre le pilier (10) au moins partiellement.

4. Procédure de production d'une prothèse dentaire selon l'une des revendications précédentes, **caractérisée en ce que** l'élément auxiliaire (36) possède une tige centrale, qui est formé en particulier en une seule pièce sur une zone frontale d'un corps de cloche (40) de l'élément auxiliaire (36), où ladite tige s'étend à travers le corps de cloche (40), en particulier surmonte celui-ci.

5. Procédure de production d'une prothèse dentaire selon l'une des revendications précédentes, **caractérisée en ce que** l'élément auxiliaire (36) présente une butée de hauteur en particulier encliquetable, qui est prévue pour l'appui au pilier (10), où ladite butée de hauteur est dans une position relative prédéterminée par rapport à la une surface frontale (22) de la section tubulaire (16).

6. Procédure de production d'une prothèse dentaire selon l'une des revendications précédentes, **caractérisée en ce que** l'élément auxiliaire (36) pour raccourcir la section tubulaire (16) présente un outil à enlèvement de copeaux, en particulier un outil manuel de fraisage, qui est guidé par le corps de cloche (40).

7. Procédure de production d'une prothèse dentaire selon la revendication 6, **caractérisée en ce qu'**une surface frontale (46) du corps de cloche (40) de l'élément auxiliaire (36) présente en particulier des dents à denture alternée qui sont destinées au raccourcissement de la section tubulaire (16) du pilier (10).

8. Procédure de production d'une prothèse dentaire selon l'une des revendications précédentes, **caractérisée en ce que** l'élément auxiliaire (36) présente un marqueur qui est capable d'apposer au moins un repère au pilier (10), où le repère indique une réduction de la section tubulaire (16) de l'élément auxiliaire (36).

9. Procédure de production d'une prothèse dentaire selon la revendication 8, **caractérisée en ce que** l'indication de la réduction, est effectuée selon une trame prédéterminée, en particulier à 3 hauteurs, en fonction de la taille, en particulier de l'extension verticale de la superstructure, dont la restauration dentaire fait partie.

10. Procédure de production d'une prothèse dentaire selon l'une des revendications précédentes, **caractérisée en ce que** dans la zone frontale d'un corps de cloche (40) de l'élément auxiliaire (36) un profil concave en forme d'anneau (gorge annulaire 48) est prévu pour le traitement par enlèvement de copeaux de la surface frontale (22) de la section tubulaire (16) du pilier (10) avec une forme convexe assortie.

11. Procédure de production d'une prothèse dentaire selon l'une des revendications précédentes, **caractérisée en ce que** l'élément auxiliaire (36) présente un élément de butée de hauteur qui présente un diamètre plus petit ou au plus égal à celui de la section tubulaire (16) du pilier (10) et qui forme une butée en face de la surface du fond de la section tubulaire (16) du pilier (10) et/ou d'une vis de pilier associée.

12. Procédure de production d'une prothèse dentaire selon l'une des revendications précédentes, **caractérisée en ce que** l'élément auxiliaire (36) présente un élément de butée de hauteur qui s'étend avec un diamètre intérieur à l'extérieur de la section tubulaire (16) du pilier (10), qui est supérieur ou égal au diamètre extérieur de la section tubulaire (16) et est prévu pour l'appui sur le collier (14) du pilier (10) pour fournir une butée de hauteur.

13. Procédure de production d'une prothèse dentaire selon l'une des revendications 11 ou 12, **caractérisée en ce que** l'élément de butée de hauteur s'étend en ajustement du jeu (72) à la section tubulaire (16) du pilier (10) et en particulier, par conséquent rend possible la torsion de l'élément auxiliaire (36) avec l'élément de butée de hauteur par rapport au pilier (10).

14. Procédure de production d'une prothèse dentaire selon l'une des revendications précédentes, **caractérisée en ce que** l'élément auxiliaire (36) forme un corps de cloche (40), dont la surface frontale présente une gorge annulaire (48), qui est prévue pour former la surface avant de la section tubulaire (16).

15. Procédure de production d'une prothèse dentaire selon l'une des revendications précédentes, **caractérisée en ce que** l'élément auxiliaire (36) présente un corps de cloche (40), dont l'extrémité libre ouverte a un bord enveloppant qui sert d'élément de butée de hauteur, en particulier contre une surface de pose (32) du collier (14) du pilier (10).

16. Procédure de production d'une prothèse dentaire selon l'une des revendications précédentes, **caractérisée en ce que** l'élément auxiliaire (36) possède au moins une cavité d'évacuation de copeaux (50), qui avoisine une surface frontale d'un corps de cloche (40) de l'élément auxiliaire (36) notifier.
